# EUROPEAN PATENT APPLICATION

(11) **EP 4 661 346 A1**
(43) Date of publication of application: **10.12.2025**
(21) Application number: 25177781.9
(22) Date of filing: 20.05.2025
(51) Int. Cl.: H04L 12/46, H04L 47/125, H04W 28/08, H04W 76/12, H04L 45/24

(54) **NETWORK COMMUNICATION METHOD AND DEVICE OF INTERNET OF THINGS DEVICE**

(30) Priority: 06.06.2024 CN 202410733666
(71) Applicant: Beijing Volcano Engine Technology Co., Ltd., Beijing 100190 (CN)
(72) Inventor: Liu, Junbo, Chaoyang District, Beijing 100028 (CN); Huang, Yuhang, Chaoyang District, Beijing 100028 (CN)
(74) Representative: Marks & Clerk LLP

(57) **Abstract**

Embodiments of the present disclosure provide a network communication method and device of an internet of things device. The method includes: determining a target UPF to which an internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed GRE tunnels; determining a GRE tunnel corresponding to each of at least two gateway devices corresponding to the target UPF; and transmitting the plurality of pieces of communication data through the GRE tunnel, where the plurality of pieces of communication data include first communication data and second communication data.

## Description

### FIELD

Embodiments of the present disclosure relate to the technical field of computer and network communication, and in particular, to a network communication method and device of an internet of things device.

### BACKGROUND

Computer and network communication technologies promote the vigorous development of the Internet of Everything, such as smart homes, autonomous driving, and industrial manufacturing industries. The communication demand between internet of things devices and Internet resources is becoming increasingly strong.

Although internet of things devices are widely used to access the Internet, there are still some drawbacks in technical solutions in related fields: 1. as for a direct connection solution between internet of things devices and network devices, direct connection of lines is stable and reliable, but consumes too much manpower and material resources, and cannot meet the needs of large-scale internet of things; and 2. as for a solution of establishing network links through a VPN, although high security is ensured, it is not suitable for interconnection between intranets.

### SUMMARY

Embodiments of the present disclosure provide a network communication method and device of an internet of things device, which can reduce the transmission pressure of a single gateway device and improve the transmission efficiency of communication data.

In a first aspect, an embodiment of the present disclosure provides a network communication method of an internet of things device, including: determining a target user plane function (UPF) to which the internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed generic routing encapsulation (GRE) tunnels; determining a GRE tunnel corresponding to each of at least two gateway devices corresponding to the target UPF, where the GRE tunnel is configured to transmit communication data between a UPF and a gateway device; and transmitting the plurality of pieces of communication data through the GRE tunnel corresponding to each of the at least two gateway devices corresponding to the target UPF; where the plurality of pieces of communication data include first communication data sent by the internet of things device to the network device and second communication data sent by the network device to the internet of things device.

In a second aspect, an embodiment of the present disclosure provides a network communication device of an internet of things device, including: a first determining unit configured to determine a target user plane function (UPF) to which the internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed generic routing encapsulation (GRE) tunnels; a second determining unit configured to determine a GRE tunnel corresponding to each of at least two gateway devices corresponding to the target UPF, where the GRE tunnel is configured to transmit communication data between a UPF and a gateway device; and a communication unit configured to transmit the plurality of pieces of communication data through the GRE tunnel corresponding to each of the at least two gateway devices corresponding to the target UPF, where the plurality of pieces of communication data include first communication data sent by the internet of things device to the network device and second communication data sent by the network device to the internet of things device.

In a third aspect, an embodiment of the present disclosure provides an electronic device, including: a processor and a memory; where the memory stores computer-executable instructions; and the processor is configured to execute the computer-executable instructions stored in the memory, to cause the at least one processor to execute the network communication method of the internet of things device according to the first aspect and various possible designs of the first aspect.

In a fourth aspect, an embodiment of the present disclosure provides a computer-readable storage medium, where the computer-readable storage medium stores computer-executable instructions which, when executed by a processor, implement the network communication method of the internet of things device according to the first aspect and various possible designs of the first aspect.

In a fifth aspect, an embodiment of the present disclosure provides a computer program product including a computer program, where the computer program, when executed by a processor, implement the network communication method of the internet of things device according to the first aspect and various possible designs of the first aspect.

According to the network communication method and device of the internet of things device provided in the embodiments, the method includes: determining a target user plane function (UPF) to which the internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed generic routing encapsulation (GRE) tunnels; determining a GRE tunnel corresponding to each of at least two gateway devices corresponding to the target UPF, where the GRE tunnel is configured to transmit communication data between a UPF and a gateway device; and transmitting the plurality of pieces of communication data through the GRE tunnel corresponding to each of the at least two gateway devices corresponding to the target UPF, where the plurality of pieces of communication data include first communication data sent by the internet of things device to the network device and second communication data sent by the network device to the internet of things device. In this technical solution, the GRE tunnel is established between the UPF and the at least two gateway devices to transmit the communication data on the UDF, thereby realizing load balancing between the at least two gateway devices, reducing the transmission pressure of a single gateway device, and further improving the transmission efficiency of the communication data.

### BRIEF DESCRIPTION OF THE DRAWINGS

In order to illustrate the technical solutions in the embodiments of the present disclosure or in the prior art more clearly, the drawings required for describing the embodiments or the prior art will be briefly introduced below. Obviously, the drawings in the following description are some embodiments of the present disclosure, and other drawings may also be obtained by those of ordinary skill in the art according to these drawings without creative efforts.
FIG. 1 is a schematic diagram of an application scenario of a network communication method of an internet of things device according to an embodiment of the present disclosure;
FIG. 2 is a first flowchart of a network communication method of an internet of things device according to an embodiment of the present disclosure;
FIG. 3 is a second flowchart of a network communication method of an internet of things device according to an embodiment of the present disclosure;
FIG. 4 is a first schematic diagram of a network communication method of an internet of things device according to an embodiment of the present disclosure;
FIG. 5 is a second schematic diagram of a network communication method of an internet of things device according to an embodiment of the present disclosure;
FIG. 6 is a third flowchart of a network communication method of an internet of things device according to an embodiment of the present disclosure;
FIG. 7 is a first schematic diagram of determining a connection state of a GRE tunnel according to an embodiment of the present disclosure;
FIG. 8 is a schematic structural diagram of a network communication device of an internet of things device according to an embodiment of the present disclosure; and
FIG. 9 is a schematic structural diagram of an electronic device according to an embodiment of the present disclosure.

### DETAILED DESCRIPTION OF EMBODIMENTS

In order to make the objectives, technical solutions, and advantages of the embodiments of the present disclosure clearer, the technical solutions in the embodiments of the present disclosure will be described clearly and comprehensively below with reference to the drawings in the embodiments of the present disclosure. Obviously, the described embodiments are some but not all embodiments of the present disclosure. Based on the embodiments in the present disclosure, all other embodiments obtained by those of ordinary skill in the art without creative efforts shall fall within the protection scope of the present disclosure.

Technical terms and technical background involved in the embodiments of the present disclosure are described below.

UPF: User Plane Function, which is an important part of a 3GPP 5G core network system architecture, and is mainly responsible for routing and forwarding related functions of user plane data packets in the 5G core network.

GRE tunnel: Generic Routing Encapsulation, which is a flexible and universal network encapsulation technology, and can establish a virtual connection between different network protocols to implement interworking between network layer protocols. In this embodiment, the GRE tunnel between the UPF and the gateway device can transmit communication data between the gateway device and the UPF.

At present, computer and network communication technologies promote the vigorous development of the Internet of Everything, such as smart homes, autonomous driving, and industrial manufacturing industries. The communication demand between internet of things devices and Internet resources is becoming increasingly strong.

Although internet of things devices are widely used to access the Internet, there are still some drawbacks in technical solutions in related fields.

1. As for a direct connection solution between internet of things devices and network devices: direct connection of lines is stable and reliable, but consumes too much manpower and material resources, and cannot meet the needs of large-scale internet of things.

2. As for a solution of establishing network links through a VPN: although high security is ensured, it is not suitable for interconnection between intranets.

3. As for a solution of connection based on network connection products provided by cloud service providers at present, it mainly aims at health check between internet of things devices and network devices, and it is difficult to effectively deal with various complex situations, and the disaster tolerance is poor.

In view of the technical problem of poor disaster tolerance in the prior art, inventors' technical concept is as follows: establishing a GRE tunnel between a UPF and a plurality of gateway devices, and realizing load balancing by crossed GRE tunnels, to ensure the continuity and stability of services.

Correspondingly, specific steps may include: firstly, determining a target user plane function (UPF) to which an internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed Generic Routing Encapsulation (GRE) tunnels. Then, a GRE tunnel corresponding to each of at least two gateway devices corresponding to the target UPF is determined, and the GRE tunnel is configured to transmit communication data between a UPF and a gateway device. Finally, the plurality of pieces of communication data are transmitted through the GRE tunnel corresponding to each of the at least two gateway devices corresponding to the target UPF, and the plurality of pieces of communication data include first communication data sent by the internet of things device to the network device and second communication data sent by the network device to the internet of things device.

In this technical solution, the GRE tunnel is established between the UPF and the at least two gateway devices to transmit the communication data on the UDF, thereby realizing load balancing between the at least two gateway devices, reducing the transmission pressure of a single gateway device, and further improving the transmission efficiency of the communication data. Further, in this technical solution, in response to one gateway device being failed, the GRE tunnel corresponding to another gateway device may be switched to transmit the communication data, thereby improving the disaster tolerance of internet of things communication.

The application scenario of the embodiments of the present disclosure is explained below.

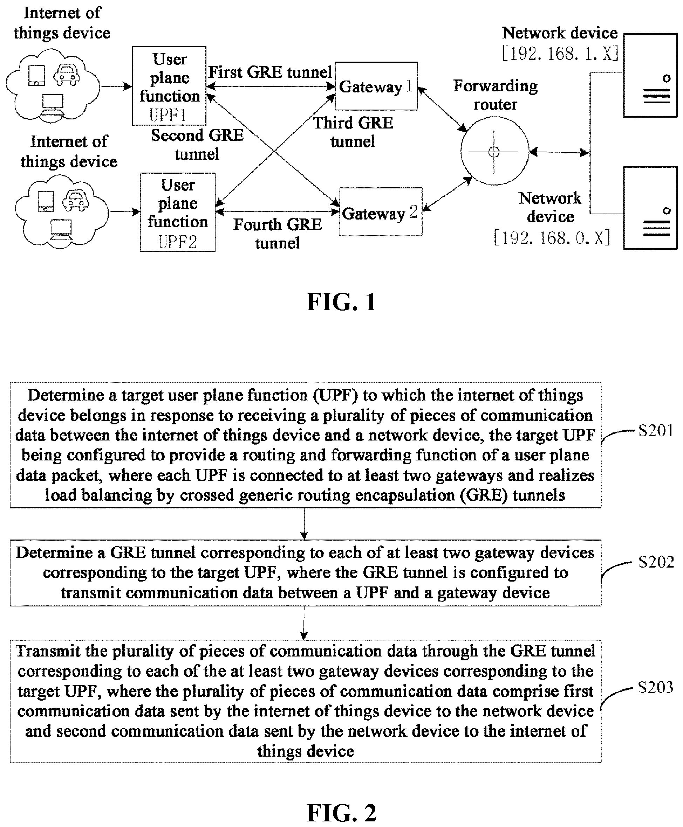

The network communication method of the internet of things device provided in the embodiments of the present disclosure may be applied to the scenario of internet of things communication between various internet of things devices. FIG. 1 is a schematic diagram of an application scenario of a network communication method of an internet of things device according to an embodiment of the present disclosure. As shown in FIG. 1, the internet of things device may register with a UPF 1 and a UPF 2 through an internet of things card. The UPF 1 and the UPF 2 may correspond to different internet of things card number segments. A first GRE tunnel is established between the UPF 1 and a gateway 1, and a second GRE tunnel is established between the UPF 1 and a gateway 2. A third GRE tunnel is established between the UPF 2 and the gateway 1, and a fourth GRE tunnel is established between the UPF 2 and the gateway 2. The UPF 1 and the UPF 2 may send resource access requests to the gateway 1 and the gateway 2 through the GRE tunnels, respectively. The gateway 1 and the gateway 2 send the resource access requests to the network device through a forwarding router. The network device sends data packets corresponding to the resource access requests to the gateway 1 and the gateway 2 through the forwarding router. The gateway 1 and the gateway 2 may return data packets corresponding to the resource access requests to the UPF 1 and the UPF 2 through the GRE tunnels, respectively.

The UPF is mainly responsible for routing and forwarding related functions of user plane data packets in the network, and usually internet of things cards need to be registered with corresponding UPFs. The gateway is a core component of this architecture, and is used for connection between networks, data forwarding, and the like.

In this internet of things communication architecture, GRE tunnels are established between a UPF and a plurality of gateways, so that the communication data on the UDF is transmitted through the plurality of gateways, reducing the transmission pressure of a single gateway device. In addition, in response to the gateway 1 being failed, data packets may be transmitted continuously through the gateway 2, thereby ensuring the continuity and stability of service and improving the disaster tolerance of internet of things communication.

The following is a specific implementation process of the network communication method and device of the internet of things device according to the embodiments of the present disclosure, and some examples are only for illustration and are not limiting. The execution body of the network communication method of the internet of things device according to the embodiments of the present disclosure is an electronic device, which may be a computer, a mobile phone, a tablet, a server, and the like.

FIG. 2 is a first flowchart of a network communication method of an internet of things device according to an embodiment of the present disclosure. As shown in FIG. 2, the network communication method of the internet of things device may include the following steps.

At S201: a target user plane function (UPF) to which the internet of things device belongs is determined in response to receiving a plurality of pieces of communication data between the internet of things device and a network device, the target UPF is configured to provide a routing and forwarding function of a user plane data packet, where each UPF is connected to at least two gateways and realizes load balancing by crossed generic routing encapsulation (GRE) tunnels.

In this embodiment, the internet of things device may register with the UPF through an internet of things card, to implement internet of things communication between the internet of things device and the network device. Optionally, based on card number of the internet of things card used by the internet of things device, the UPF corresponding to the card number may be determined as the target UPF to which the internet of things device belongs . The target UPF may provide the routing and forwarding function of the user plane data packet. For example, the target UPF may receive a resource access request sent by the internet of things device, or may send a data packet corresponding to a resource access request to the internet of things device. The internet of things device may be a car, a household appliance, and the like.

In some embodiments, the plurality of pieces of communication data include first communication data sent by the internet of things device to the network device and second communication data sent by the network device to the internet of things device. In this embodiment, one or more UPFs may exist. Exemplarily, as shown in FIG. 1, two UPFs exist, namely, a UPF 1 and a UPF 2.

S202: a GRE tunnel corresponding to each of at least two gateway devices corresponding to the target UPF is determined, and the GRE tunnel is configured to transmit communication data between a UPF and a gateway device.

In this embodiment, the GRE tunnel between the UPF and the gateway device may be established through a GRE tunnel technology to implement a point-to-point connection between the UPF and the gateway device. The plurality of pieces of communication data may be transmitted by sending messages, and messages of different protocols are encapsulated and communicated through the GRE tunnel.

Exemplarily, as shown in FIG. 1, four crossed tunnels are established between the UPF 1, the UPF 2, the gateway 1, and the gateway 2. A first GRE tunnel is established between the UPF 1 and the gateway 1, and a second GRE tunnel is established between the UPF 1 and the gateway 2. A third GRE tunnel is established between the UPF 2 and the gateway 1, and a fourth GRE tunnel is established between the UPF 2 and the gateway 2. The communication data among the UPF 1, the UPF 2, the gateway 1, and the gateway 2 is transmitted through the four crossed tunnels.

At S203: the plurality of pieces of communication data are transmitted through the GRE tunnel corresponding to each of the at least two gateway devices corresponding to the target UPF, and the plurality of pieces of communication data include first communication data sent by the internet of things device to the network device and second communication data sent by the network device to the internet of things device.

Exemplarily, the target UPF is the UPF 1. The communication data between the UPF 1 and the gateway 1 may be transmitted through the first GRE tunnel. The communication data between the UPF 1 and the gateway 2 may be transmitted through the second GRE tunnel.

In this technical solution, GRE tunnels are established between a UPF and at least two gateway devices to transmit the communication data on the UDF, thereby realizing load balancing between the at least two gateway devices, reducing the transmission pressure of a single gateway device, and further improving the transmission efficiency of the communication data.

It should be noted that in this internet of things communication architecture, in response to one gateway device being failed, the GRE tunnel corresponding to another gateway device may be directly switched to transmit communication data, thereby improving the disaster tolerance of internet of things communication.

In this embodiment, the GRE tunnel may provide users with two flexible connection modes: a public network mode and a dedicated line mode, so as to cover more usage scenarios. The public network mode meets the requirements of fast and free network connection, focusing on the convenience of the solution; while the dedicated line mode meets the requirements of high data protection, such as in the fields of finance, medical care, etc., focusing on the security of the solution. Through the design of these two modes, we can select an appropriate solution based on different scenario requirements, thereby providing customer experience improvement as much as possible. It can be seen that the internet of things communication architecture meets the networking requirements of internet of things industry users and Internet resources, and supports consumers' mobile devices to realize an intranet connection with network resources through internet of things cards, so that internet of things card users can access related network resources through a secure, stable and reliable network.

Exemplarily, as shown in FIG. 1, four crossed tunnels are established among the UPF 1, the UPF 2, the gateway 1, and the gateway 2, and the first GRE tunnel is established between the UPF 1 and the gateway 1, and the second GRE tunnel is established between the UPF 1 and the gateway 2. The third GRE tunnel is established between the UPF 2 and the gateway 1, and the fourth GRE tunnel is established between the UPF 2 and the gateway 2. In response to the gateway 1 being failed, data packets may be transmitted continuously through the gateway 2, thereby ensuring the continuity and stability of service and improving the disaster tolerance of internet of things communication.

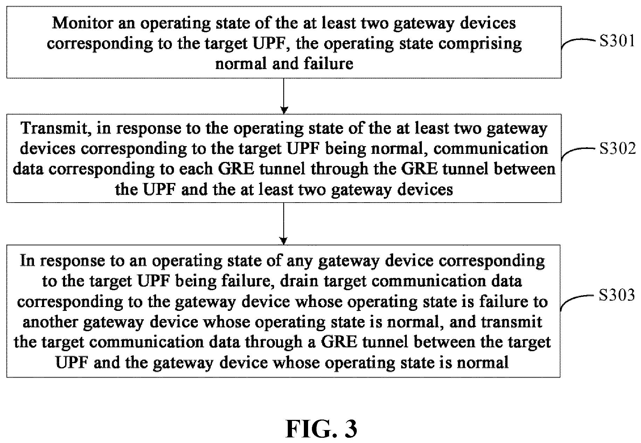

FIG. 3 is a second flowchart of a network communication method of an internet of things device according to an embodiment of the present disclosure. In this embodiment, the disaster tolerance of internet of things communication is described in detail based on the specific method of transmitting the plurality of pieces of communication data through the GRE tunnel corresponding to each of the at least two gateway devices corresponding to the target UPF in S203. As shown in FIG. 3, the method may include the following steps.

At S301, an operating state of at least two gateway devices corresponding to the target UPF is monitored, and the operating state includes normal and failure.

In this embodiment, an operating state of a gateway device may be determined through an connection state of a GRE tunnel between the gateway device and each UPF.

Optionally, in response to each of the GRE tunnels between the UPF and the gateway device being in a disconnected state, it is determined that the gateway device fails. Correspondingly, monitoring the operating state of the at least two gateway devices corresponding to the target UPF may include: determining, for each gateway device, a connection state of a GRE tunnel established between the gateway device and each UPF; in response to the connection state of the GRE tunnel established between the gateway device and each UPF being in the disconnected state, determining that the operating state of the gateway device is failure; and in response to a connection state of one or more GRE tunnels being in a connected state, determining that the operating state of the gateway device is normal.

Exemplarily, as shown in FIG. 1, four crossed tunnels are established among the UPF 1, the UPF 2, the gateway 1, and the gateway 2. The first GRE tunnel is established between the UPF 1 and the gateway 1, and the second GRE tunnel is established between the UPF 1 and the gateway 2. The third GRE tunnel is established between the UPF 2 and the gateway 1, and the fourth GRE tunnel is established between the UPF 2 and the gateway 2.

For the gateway 1, in response to the first GRE tunnel and the third GRE tunnel being in the disconnected state, it is determined that the operating state of the gateway 1 is failure; and in response to the first GRE tunnel and/or the third GRE tunnel being in the connected state, it is determined that the operating state of the gateway 1 is normal.

For the gateway 2, in response to the second GRE tunnel and the fourth GRE tunnel being in the disconnected state, it is determined that the operating state of the gateway 2 is failure; and in response to the second GRE tunnel and/or the fourth GRE tunnel being in the connected state, it is determined that the operating state of the gateway 2 is normal.

At S302: in response to the operating state of the at least two gateway devices corresponding to the target UPF being normal, communication data corresponding to each GRE tunnel is transmitted through the GRE tunnel between the UPF and the at least two gateway devices.

At S303: in response to an operating state of any gateway device corresponding to the target UPF being failure, target communication data corresponding to the gateway device whose operating state is failure is drained to another gateway device whose operating state is normal, and the target communication data is transmitted through a GRE tunnel between the target UPF and the gateway device whose operating state is normal.

Exemplarily, as shown in FIG. 1, the target UPF is the UPF 1. The first GRE tunnel is established between the UPF 1 and the gateway 1, and the second GRE tunnel is established between the UPF 1 and the gateway 2. In this case, in response to the operating state of the gateway 1 being failure, the target communication data between the UPF 1 and the gateway 1 may be transmitted through the second GRE tunnel.

In some embodiments, the target communication data includes a first resource access request and a first data packet fed back by the network device based on the first resource access request. Correspondingly, transmitting the target communication data through the GRE tunnel between the target UPF and the gateway device whose operating state is normal includes the following steps.
(1) In response to the target UPF receiving the first resource access request sent by the internet of things device, the first resource access request is transmitted to the gateway device whose operating state is normal through the GRE tunnel between the target UPF and the gateway device whose operating state is normal.
(2) The first resource access request is sent to the forwarding router through the gateway device whose operating state is normal, and the first resource access request is sent to the network device through the forwarding router.
   In some embodiments, the forwarding router may implement the cutover of the corresponding line according to the health state of the gateway based on load balancing, to ensure that in response to the gateway or the network having a problem, the data flow may be seamlessly transferred to another healthy line, so as to ensure the continuity and stability of communication. Exemplarily, the forwarding router may be an ECMP (Equal Cost Multi-Path) forwarding router.
(3) A drainage routing corresponding to the gateway device whose operating state is failure is added to a routing table of the forwarding router, and the drainage routing includes a device identification of the gateway device whose operating state is normal and address information of the target UPF.

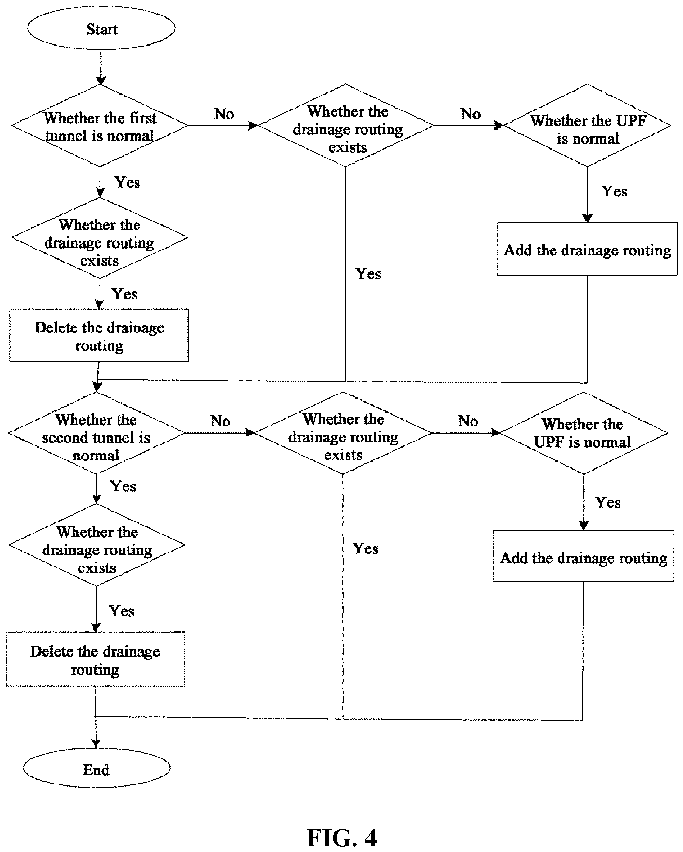

In some embodiments, as shown in FIG. 4, in response to adding the drainage routing corresponding to the gateway device whose operating state is failure, it may be determined whether the drainage routing exists first, and in response to the drainage routing existing, the drainage routing does not need to be added; and in response to the drainage routing not existing, the drainage routing is added.

It should be noted that in response to the operating state of the gateway device being failure, the gateway routing corresponding to the gateway device is deleted. In response to the operating state of the gateway device returning to normal, the gateway routing corresponding to the gateway device is added. Optionally, the gateway routing corresponding to the gateway device may include the device identification of the gateway device and the address information of the target UPF.

In this embodiment of the present disclosure, the forwarding routing is controlled to remove the non-healthy gateway from the routing system, and then the traffic is redirected to a healthy gateway. In this way, the return traffic of the network device can continue to reach the target internet of things device through the healthy gateway smoothly. This method not only ensures the continuity of the data transmission process, but also greatly improves the stability and robustness of the network, and users hardly perceive the service interruption caused by a network problem.

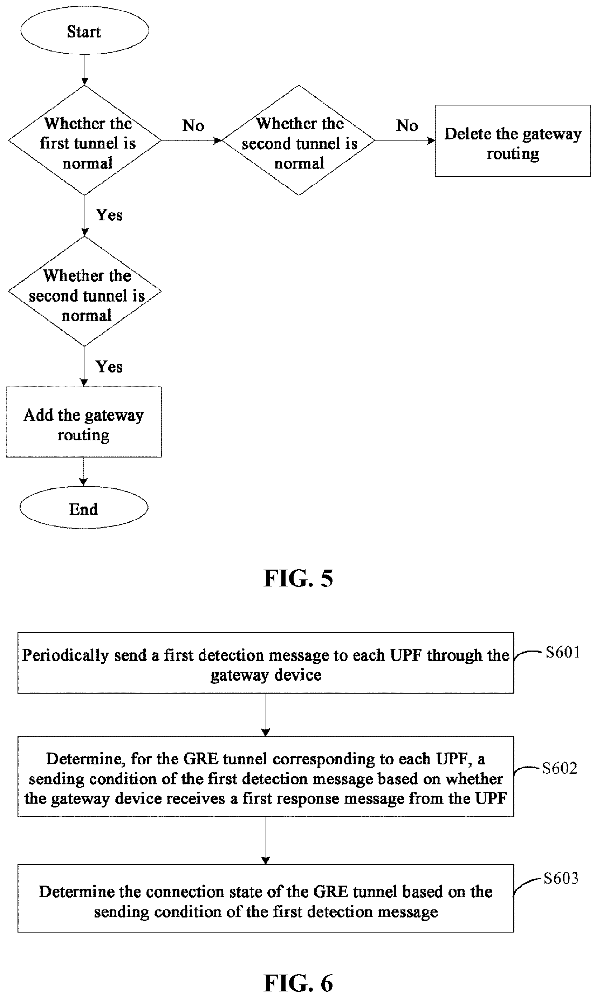

Exemplarily, as shown in FIG. 5, the target UPF is the UPF 1, and in response to the connection between the first GRE tunnel and the second GRE tunnel between the UPF 1 and the gateway 1 being abnormal, it is determined that the operating state of the gateway 1 is failure. At this time, the gateway routing corresponding to the gateway 1 needs to be deleted. In response to the first GRE tunnel and the second GRE tunnel returning to normal, it is determined that the operating state of the gateway 1 returns to normal, and at this time, the gateway routing corresponding to the gateway 1 needs to be added. The gateway routing corresponding to the gateway 1 may include the device identification of the gateway 1 and the address information of the UPF 1.

(4) In response to the forwarding router receiving the first data packet fed back by the network device, the first data packet is sent to the gateway device whose operating state is normal based on the drainage routing.

(5) The first data packet is transmitted to the target UPF through the gateway device whose operating state is normal by using the GRE tunnel between the target UPF and the gateway device whose operating state is normal, and the first data packet is forwarded to the internet of things device through the target UPF.

In this embodiment of the present disclosure, a real-time response can be made to the health status of each gateway, and the drainage routing can be automatically added or deleted. This means that once the gateway device fails, the system can automatically arrange its peer gateway into the routing, and automatically remove the drainage routing after the gateway recovers. Through this mechanism of automatically controlling the drainage routing, not only the flexibility of routing is enhanced, and seamless switching of traffic from the failed gateway to the healthy gateway is realized, but also the fault tolerance and recovery capabilities of the network are significantly improved, and the robustness and reliability of the system are greatly optimized.

In some embodiments, a preset address set (e.g., an access blacklist) may also be added to the routing table to implement data access control and traffic filtering, thereby effectively preventing attacks of abnormal traffic. Optionally, the preset address set may include address information of a plurality of network devices.

It should be noted that, as shown in FIG. 5, before the drainage routing corresponding to the gateway device whose operating state is failure is added, the method further includes: determining an operating state of the UPF; in response to the operating state of the UPF being normal, adding, to the routing table of the forwarding router, the drainage routing corresponding to the gateway device whose operating state is failure; and in response to the operating state of the UPF being failure, reporting a failure to a monitoring server corresponding to the UPF.

In some embodiments, the operating state of the UPF may be determined through the connection state of the GRE tunnel between the UPF and each gateway device. Correspondingly, determining the operating state of the UPF includes: determining the connection state of the GRE tunnel established between the UPF and each gateway device; in response to the connection state of the GRE tunnel established between the UPF and each gateway device being in the disconnected state, determining that the operating state of the UPF is failure; and in response to a connection state of one or more GRE tunnels being in the connected state, determining that the operating state of the UPF is normal.

In the embodiments of the present disclosure, the operating state of the UPF and the operating state of the gateway device may be determined based on the connection state of the GRE tunnel, which is optimized in the health check mechanism and provides a more efficient and accurate cross-device health detection method, so as to enable a rapid response and processing in response to a problem being occurred, thereby ensuring the continuity and stability of the service.

In the embodiments of the present disclosure, GRE tunnels are established between the UPF and the two gateway devices, and in response to one gateway device being failed, the GRE tunnel corresponding to another gateway device may be directly switched to transmit the communication data, thereby improving the disaster tolerance of internet of things communication, and maintaining efficient and stable operation even in complex and changing environments.

FIG. 6 is a third flowchart of a network communication method of an internet of things device according to an embodiment of the present disclosure. In this embodiment, the specific method of determining the connection state of the GRE tunnel is described in detail. As shown in FIG. 6, the method of determining the connection state of the GRE tunnel established between the gateway device and each UPF may include the following steps.

At S601, a first detection message is periodically sent to each UPF through the gateway device.

In this embodiment, the first detection message is used for a health check on the GRE tunnel. In some embodiments, a source address of a local end and a destination address of a peer end may be encapsulated into a Keepalive message and sent to the peer end in combination with the characteristics of the GRE message. The peer end decapsulates the message, and then performs a reply based on the source address of the sender after identifying the Keepalive message, thereby realizing the health detection.

It should be noted that the above Keepalive message is a native GRE Keepalive message constructed based on a Linux kernel protocol stack. The Keepalive message belongs to a function of the GRE tunnel protocol, supports RFC standards, and directly adapts to carrier solutions, so the availability of the Keepalive detection message is high. The RFC standards are a series of memorandums published by the Internet Engineering Task Force.

Furthermore, in order to ensure the efficiency of the health check, in some embodiments, the present application may also implement sending and receiving messages in the form of concurrent go language coroutines to avoid excessive load on a single process.

At S602, for the GRE tunnel corresponding to each UPF, a sending condition of the first detection message is determined based on whether the gateway device receives a first response message from the UPF.

At S603, the connection state of the GRE tunnel is determined based on the sending condition of the first detection message.

In some embodiments, the first connection state includes a connected state and a disconnected state. The sending condition of the first detection message includes sending success and sending failure. Correspondingly, this step may include: in response to the first detection message being in sending failure, determining a number of times of consecutive sending failures of the first detection message, and in response to the number of times reaching a first threshold, determining that the GRE tunnel is in the disconnected state; in response to the first detection message being in sending success, determining a number of times of consecutive sending successes of the first detection message, and in response to the number of times reaches a second threshold, determining that the GRE tunnel is in the connected state.

In the embodiments of the present disclosure, the values of the first threshold and the second threshold are not specifically limited, and may be set and modified as required. Exemplarily, the first threshold is 3, and the second threshold is 3.

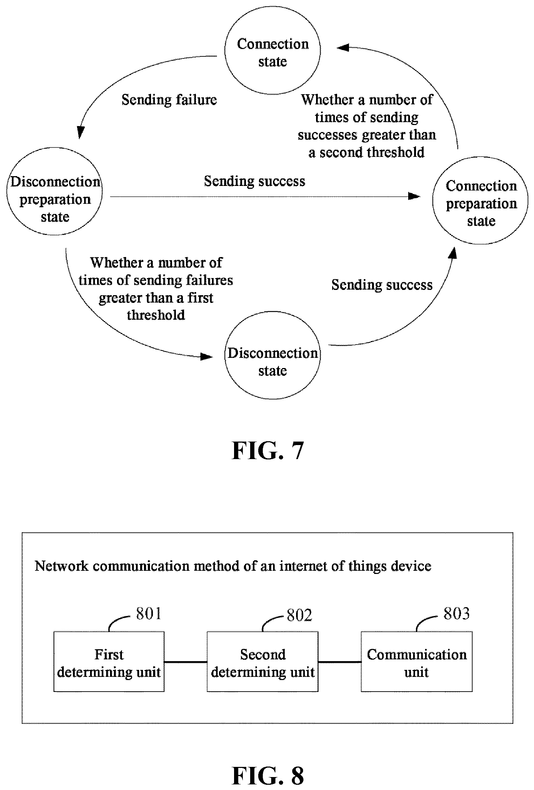

In other embodiments, the first connection state includes a connected state, a connection preparation state, a disconnected state, and a disconnection preparation state. Correspondingly, as shown in FIG. 7, determining the connection state of the GRE tunnel based on the sending condition of the first detection message may include the following multiple conditions.
1. In response to the first detection message being in sending failure and the GRE tunnel is in the connected state, the connection state of the GRE tunnel is switched from the connected state to the disconnection preparation state.
2. In response to the first detection message being in sending failure and the GRE tunnel is in the disconnection preparation state, the number of times of consecutive sending failures of the first detection message is determined, and in response to the number of times reaching the first threshold, the connection state of the GRE tunnel is switched from the disconnection preparation state to the disconnected state.
3. In response to the first detection message being in sending failure and the GRE tunnel being in the disconnected state, the disconnected state is kept.
4. In response to the first detection message being in sending success and the GRE tunnel being in the connected state, the connected state is kept.
5. In response to the first detection message being in sending success and the GRE tunnel being in the disconnected state or the disconnection preparation state, the connection state of the GRE tunnel is switched from the disconnected state to the connection preparation state.
6. In response to the first detection message being in sending success and the GRE tunnel being in the connection preparation state, the number of times of consecutive sending successes of the first detection message is determined, and in response to the number of times reaching the second threshold, the connection state of the GRE tunnel is switched from the connection preparation state to the connected state.

In the embodiment of the present disclosure, in this internet of things communication architecture, GRE tunnels are established between a UPF and at least two gateway devices, so that the transmission pressure of a single gateway device is reduced, and the transmission efficiency of the communication data is further improved. In addition, in response to any gateway device being failed, the GRE tunnel corresponding to another gateway device may be directly switched to transmit the communication data, thereby improving the disaster tolerance of internet of things communication. The GRE tunnel may provide two flexible connection modes: a public network and a dedicated line, to implement cross-device health detection.

FIG. 8 is a schematic structural diagram of a network communication device of an internet of things device according to an embodiment of the present disclosure. As shown in FIG. 8, the network communication device of the internet of things device includes: a first determining unit 801, a second determining unit 802 and a communication unit 803.

The first determining unit 801 is configured to determine a target user plane function (UPF) to which the internet of things device belongs in response to receiving a plurality of pieces of communication data between the internet of things device and a network device. The target UPF is configured to provide a routing and forwarding function of a user plane data packet, and each UPF is connected to at least two gateways and realizes load balancing by crossed generic routing encapsulation (GRE) tunnels.

The second determining unit 802 is configured to determine a GRE tunnel corresponding to each of at least two gateway devices corresponding to the target UPF, and the GRE tunnel is configured to transmit communication data between a UPF and a gateway device.

The communication unit 803 is configured to transmit the plurality of pieces of communication data through the GRE tunnel corresponding to each of the at least two gateway devices corresponding to the target UPF. The plurality of pieces of communication data include first communication data sent by the internet of things device to the network device and second communication data sent by the network device to the internet of things device.

According to one or more embodiments of the present disclosure, the communication unit 803 transmits the plurality of pieces of communication data through the GRE tunnel corresponding to each of the at least two gateway devices corresponding to the target UPF, which specifically includes: monitoring an operating state of the at least two gateway devices corresponding to the target UPF, where the operating state includes normal and failure; transmitting, in response to the operating state of the at least two gateway devices corresponding to the target UPF being normal, communication data corresponding to each GRE tunnel through the GRE tunnel between the UPF and the at least two gateway devices; and in response to an operating state of any gateway device corresponding to the target UPF being failure, draining target communication data corresponding to the gateway device whose operating state is failure to another gateway device whose operating state is normal, and transmitting the target communication data through a GRE tunnel between the target UPF and the gateway device whose operating state is normal.

According to one or more embodiments of the present disclosure, the communication unit 803 monitors the operating state of the at least two gateway devices corresponding to the target UPF, which specifically includes: determining, for each gateway device, a connection state of a GRE tunnel established between the gateway device and each UPF; in response to the connection state of the GRE tunnel established between the gateway device and each UPF being in a disconnected state, determining that the operating state of the gateway device is failure; and in response to a connection state of one or more GRE tunnels being in a connected state, determining that the operating state of the gateway device is normal.

According to one or more embodiments of the present disclosure, the communication unit 803 determines the connection state of the GRE tunnel established between the gateway device and each UPF, which specifically includes: periodically sending a first detection message to each UPF through the gateway device; determining, for the GRE tunnel corresponding to each UPF, a sending condition of the first detection message based on whether the gateway device receives a first response message from the UPF; and determining the connection state of the GRE tunnel based on the sending condition of the first detection message.

According to one or more embodiments of the present disclosure, the sending condition of the first detection message includes sending success and sending failure. Correspondingly, the communication unit 803 determines the connection state of the GRE tunnel based on the sending condition of the first detection message, which specifically includes: in response to the first detection message being in sending failure, determining the number of times of consecutive sending failures of the first detection message, and in response to the number of times reaching a first threshold, determining that the GRE tunnel is in the disconnected state; in response to the first detection message being in sending success, determining the number of times of consecutive sending successes of the first detection message, and in response to the number of times reaching a second threshold, determining that the GRE tunnel is in the connected state.

According to one or more embodiments of the present disclosure, the target communication data includes a first resource access request and a first data packet fed back by the network device based on the first resource access request. The communication unit 803 transmits the target communication data through the GRE tunnel between the target UPF and the gateway device whose operating state is normal, which specifically includes: in response to the target UPF receiving the first resource access request sent by the internet of things device, transmitting the first resource access request to the gateway device whose operating state is normal through the GRE tunnel between the target UPF and the gateway device whose operating state is normal; sending the first resource access request to the forwarding router through the gateway device whose operating state is normal, and sending the first resource access request to the network device through the forwarding router; adding, to the routing table of the forwarding router, a drainage routing corresponding to the gateway device whose operating state is failure, the drainage routing including a device identification of the gateway device whose operating state is normal and address information of the target UPF; in response to the forwarding router receiving the first data packet fed back by the network device, sending the first data packet to the gateway device whose operating state is normal based on the drainage routing; and transmitting the first data packet to the target UPF through the gateway device whose operating state is normal by using the GRE tunnel between the target UPF and the gateway device whose operating state is normal, and forwarding the first data packet to the internet of things device through the target UPF.

According to one or more embodiments of the present disclosure, the communication unit 803 is further configured to, in response to the operating state of the gateway device whose operating state is failure returning to normal, delete the drainage routing, and transmit the target communication data through the GRE tunnel between the UPF and the gateway device whose operating state is failure.

According to one or more embodiments of the present disclosure, the network communication device further includes: a monitoring unit. The monitoring unit is configured to determine an operating state of the UPF; in response to the operating state of the UPF being normal, add, to the routing table of the forwarding router, the drainage routing corresponding to the gateway device whose operating state is failure; and in response to the operating state of the UPF being failure, report a failure to a monitoring server corresponding to the UPF.

According to one or more embodiments of the present disclosure, the monitoring unit determines the operating state of the UPF, which specifically includes: determining the connection state of the GRE tunnel established between the UPF and each gateway device; in response to the connection state of the GRE tunnel established between the UPF and each gateway device being in the disconnected state, determining that the operating state of the UPF is failure; and in response to a connection state of one or more GRE tunnels being in the connected state, determining that the operating state of the UPF is normal.

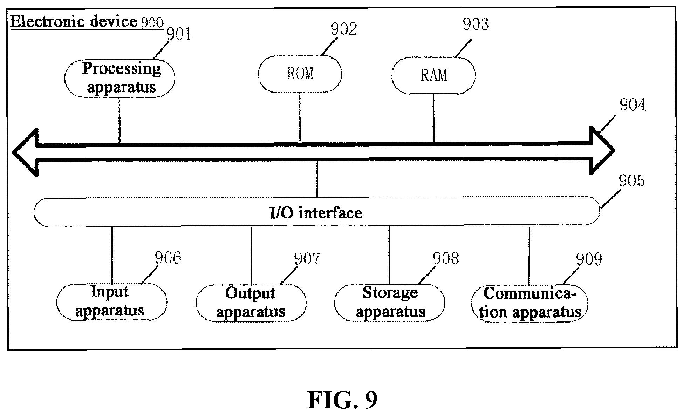

Reference is made to FIG. 9, which illustrates a schematic structural diagram of an electronic device 900 suitable for implementing the embodiments of the present disclosure. The electronic device 900 may be a terminal device or a server. The terminal device may include, but is not limited to, mobile terminals such as a mobile phone, a laptop, a digital broadcast receiver, a personal digital assistant (PDA), a portable Android device, a portable media player (PMP), and a vehicle-mounted terminal (such as a vehicle navigation terminal); and fixed terminals such as a digital TV and a desktop computer. The electronic device shown in FIG. 9 is only an example, and should not impose any limitation on the function and scope of use of the embodiments of the present disclosure.

As shown in FIG. 9, the electronic device 900 may include a processing apparatus (such as a central processing unit and a graphics processor) 901. The processing apparatus 901 may perform various appropriate actions and processing according to a program stored in a read-only memory (abbreviated as ROM) 902 or a program loaded from a storage apparatus 908 into a random access memory (abbreviated as RAM) 903. The RAM 903 further stores various programs and data required for the operation of the electronic device 900. The processing apparatus 901, the ROM 902, and the RAM 903 are connected to each other through a bus 904. An input/output (I/O) interface 905 is also connected to the bus 904.

Generally, the following apparatus may be connected to the I/O interface 905: an input apparatus 906 including, for example, a touch screen, a touch pad, a keyboard, a mouse, a camera, a microphone, an accelerometer, a gyroscope, and the like; an output apparatus 907 including, for example, a liquid crystal display (abbreviated as LCD), a speaker, a vibrator, and the like; a storage apparatus 908 including, for example, a magnetic tape, a hard disk, and the like; and a communication apparatus 909. The communication apparatus 909 may allow the electronic device 900 to perform wireless or wired communication with other devices to exchange data. Although FIG. 9 shows the electronic device 900 having various apparatus, it should be understood that not all the illustrated apparatuses are necessarily implemented or included. Alternatively, more or fewer apparatus may be implemented or provided.

In particular, according to the embodiments of the present disclosure, the processes described above with reference to the flowcharts may be implemented as a computer software program. For example, an embodiment of the present disclosure includes a computer program product, which includes a computer program carried on a computer readable medium. The computer program includes program codes for executing the method shown in the flowchart. In such an embodiment, the computer program may be downloaded and installed from a network through the communication apparatus 909, or may be installed from the storage apparatus 908, or may be installed from the ROM 902. When the computer program is executed by the processing apparatus 901, the above functions defined in the methods of the embodiments of the present disclosure are implemented.

It should be noted that the above computer readable medium in the present disclosure may be a computer readable signal medium or a computer readable storage medium or any combination thereof. The computer readable storage medium may be, for example, but is not limited to, an electrical, magnetic, optical, electromagnetic, infrared, or semiconductor system, apparatus or device, or any combination thereof. More specific examples of the computer readable storage medium may include, but are not limited to: an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, a computer readable storage medium may be any tangible medium that contains or stores a program, and the program may be used by or in combination with an instruction execution system, apparatus, or device. In the present disclosure, a computer readable signal medium may include a data signal propagated in baseband or as a part of a carrier wave, in which computer readable program codes are carried. This propagated data signal may take a variety of forms, including but not limited to an electromagnetic signal, an optical signal, or any suitable combination thereof. The computer readable signal medium may also be any computer readable medium other than the computer readable storage medium. The computer readable signal medium may send, propagate, or transmit a program used by or in combination with an instruction execution system, apparatus, or device. The program codes contained in the computer readable medium may be transmitted by any suitable medium, including, but not limited to, an electrical wire, an optical cable, RF (radio frequency), etc., or any suitable combination thereof.

The above computer readable medium may be included in the above electronic device; or may also exist alone without being assembled into the electronic device.

The above computer readable medium carries one or more programs, and when the one or more programs are executed by the electronic device, the electronic device is caused to execute the method shown in the above embodiments.

The computer program codes used to perform the operations of the present disclosure may be written in one or more programming languages or a combination thereof. The above programming languages include object-oriented programming languages such as Java, Smalltalk, C++, and also conventional procedural programming languages such as "C" language or similar programming languages. The program codes may be executed entirely on a user's computer, partly on a user's computer, as a stand-alone software package, partly on a user's computer and partly on a remote computer, or entirely on a remote computer or server. In the case of the remote computer, the remote computer may be connected to the user's computer through any kind of network, including a local area network (abbreviated as LAN) or a wide area network (abbreviated as WAN), or may be connected to an external computer (for example, through the Internet using an Internet service provider).

The flowcharts and block diagrams in the drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the drawings. For example, two blocks shown in succession may, in fact, be executed substantially concurrently, or the blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The units involved in the embodiments described in the present disclosure may be implemented by means of software or hardware. The name of a unit does not constitute a limitation of the unit itself under certain circumstances. For example, a first acquisition unit may also be described as "a unit for acquiring at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), and the like.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof.

In a first aspect, according to one or more embodiments of the present disclosure, a network communication method of an internet of things device is provided, and the method includes: determining a target user plane function (UPF) to which the internet of things device belongs in response to receiving a plurality of pieces of communication data between the internet of things device and a network device, the target UPF being configured to provide a routing and forwarding function of a user plane data packet, where each UPF is connected to at least two gateways and realizes load balancing by crossed generic routing encapsulation (GRE) tunnels; determining a GRE tunnel corresponding to each of at least two gateway devices corresponding to the target UPF, where the GRE tunnel is configured to transmit communication data between a UPF and a gateway device; and transmitting the plurality of pieces of communication data through the GRE tunnel corresponding to each of the at least two gateway devices corresponding to the target UPF, where the plurality of pieces of communication data include first communication data sent by the internet of things device to the network device and second communication data sent by the network device to the internet of things device.

According to one or more embodiments of the present disclosure, transmitting the plurality of pieces of communication data through the GRE tunnel corresponding to each of the at least two gateway devices corresponding to the target UPF includes: monitoring an operating state of the at least two gateway devices corresponding to the target UPF, the operating state including normal and failure; transmitting, in response to the operating state of the at least two gateway devices corresponding to the target UPF being normal, communication data corresponding to each GRE tunnel through the GRE tunnel between the UPF and the at least two gateway devices; and in response to an operating state of any gateway device corresponding to the target UPF being failure, draining target communication data corresponding to the gateway device whose operating state is failure to another gateway device whose operating state is normal, and transmitting the target communication data through a GRE tunnel between the target UPF and the gateway device whose operating state is normal.

According to one or more embodiments of the present disclosure, monitoring the operating state of the at least two gateway devices corresponding to the target UPF includes: determining, for each gateway device, a connection state of a GRE tunnel established between the gateway device and each UPF; in response to the connection state of the GRE tunnel established between the gateway device and each UPF being in a disconnected state, determining that the operating state of the gateway device is failure; and in response to a connection state of one or more GRE tunnels being in the connected state, determining that the operating state of the gateway device is normal.

According to one or more embodiments of the present disclosure, determining the connection state of the GRE tunnel established between the gateway device and each UPF includes: periodically sending a first detection message to each UPF through the gateway device; determining, for the GRE tunnel corresponding to each UPF, a sending condition of the first detection message based on whether the gateway device receives a first response message from the UPF; and determining the connection state of the GRE tunnel based on the sending condition of the first detection message.

According to one or more embodiments of the present disclosure, the sending condition of the first detection message includes sending success and sending failure. Correspondingly, determining the connection state of the GRE tunnel based on the sending condition of the first detection message includes: in response to the first detection message being in sending failure, determining a number of times of consecutive sending failures of the first detection message, and in response to the number of times reaching a first threshold, determining that the GRE tunnel is in the disconnected state; in response to the first detection message being in sending success, determining a number of times of consecutive sending successes of the first detection message, and in response to the number of times reaching a second threshold, determining that the GRE tunnel is in the connected state.

According to one or more embodiments of the present disclosure, the target communication data includes a first resource access request and a first data packet fed back by the network device based on the first resource access request. Transmitting the target communication data through the GRE tunnel between the target UPF and the gateway device whose operating state is normal includes: in response to the target UPF receiving the first resource access request sent by the internet of things device, transmitting the first resource access request to the gateway device whose operating state is normal through the GRE tunnel between the target UPF and the gateway device whose operating state is normal; sending the first resource access request to the forwarding router through the gateway device whose operating state is normal, and sending the first resource access request to the network device through the forwarding router; adding, to the routing table of the forwarding router, a drainage routing corresponding to the gateway device whose operating state is failure, the drainage routing including a device identification of the gateway device whose operating state is normal and address information of the target UPF; in response to the forwarding router receiving the first data packet fed back by the network device, sending the first data packet to the gateway device whose operating state is normal based on the drainage routing; and transmitting the first data packet to the target UPF through the gateway device whose operating state is normal by using the GRE tunnel between the target UPF and the gateway device whose operating state is normal, and forwarding the first data packet to the internet of things device through the target UPF.

According to one or more embodiments of the present disclosure, the method further includes: in response to the operating state of the gateway device whose operating state is failure returning to normal, deleting the drainage routing, and transmitting the target communication data through the GRE tunnel between the UPF and the gateway device whose operating state is failure.

According to one or more embodiments of the present disclosure, before the drainage routing corresponding to the gateway device whose operating state is failure is added to the routing table of the forwarding router, the method further includes: determining an operating state of the UPF; in response to the operating state of the UPF being normal, adding, to the routing table of the forwarding router, the drainage routing corresponding to the gateway device whose operating state is failure; and in response to the operating state of the UPF being failure, reporting a failure to a monitoring server corresponding to the UPF.

According to one or more embodiments of the present disclosure, determining the operating state of the UPF includes: determining a connection state of a GRE tunnel established between the UPF and each gateway device; in response to the connection state of the GRE tunnel established between the UPF and each gateway device being in a disconnected state, determining that the operating state of the UPF is failure; and in response to a connection state of one or more GRE tunnels being in a connected state, determining that the operating state of the UPF is normal.

In a second aspect, according to one or more embodiments of the present disclosure, a network communication device of an internet of things device is provided, and the device includes: a first determining unit, a second determining unit and a communication unit.

The first determining unit is configured to determine a target user plane function (UPF) to which the internet of things device belongs in response to receiving a plurality of pieces of communication data between the internet of things device and a network device, the target UPF is configured to provide a routing and forwarding function of a user plane data packet, and each UPF is connected to at least two gateways and realizes load balancing by crossed generic routing encapsulation (GRE) tunnels.

The second determining unit is configured to determine a GRE tunnel corresponding to each of at least two gateway devices corresponding to the target UPF, and the GRE tunnel is configured to transmit communication data between a UPF and a gateway device.

The communication unit is configured to transmit the plurality of pieces of communication data through the GRE tunnel corresponding to each of the at least two gateway devices corresponding to the target UPF, and the plurality of pieces of communication data include first communication data sent by the internet of things device to the network device and second communication data sent by the network device to the internet of things device.

According to one or more embodiments of the present disclosure, the communication unit transmits the plurality of pieces of communication data through the GRE tunnel corresponding to each of the at least two gateway devices corresponding to the target UPF, which specifically includes: monitoring an operating state of the at least two gateway devices corresponding to the target UPF, the operating state including normal and failure; transmitting, in response to the operating state of the at least two gateway devices corresponding to the target UPF being normal, communication data corresponding to each GRE tunnel through the GRE tunnel between the UPF and the at least two gateway devices; and in response to an operating state of any gateway device corresponding to the target UPF being failure, draining target communication data corresponding to the gateway device whose operating state is failure to another gateway device whose operating state is normal, and transmitting the target communication data through a GRE tunnel between the target UPF and the gateway device whose operating state is normal.

According to one or more embodiments of the present disclosure, the communication unit monitors the operating state of the at least two gateway devices corresponding to the target UPF, which specifically includes: determining, for each gateway device, a connection state of a GRE tunnel established between the gateway device and each UPF; in response to the connection state of the GRE tunnel established between the gateway device and each UPF being in a disconnected state, determining that the operating state of the gateway device is failure; and in response to a connection state of one or more GRE tunnels being in a connected state, determining that the operating state of the gateway device is normal.

According to one or more embodiments of the present disclosure, the communication unit determines the connection state of the GRE tunnel established between the gateway device and each UPF, which specifically includes: periodically sending a first detection message to each UPF through the gateway device; determining, for the GRE tunnel corresponding to each UPF, a sending condition of the first detection message based on whether the gateway device receives a first response message from the UPF; and determining the connection state of the GRE tunnel based on the sending condition of the first detection message.

According to one or more embodiments of the present disclosure, the sending condition of the first detection message includes sending success and sending failure. Correspondingly, the communication unit determines the connection state of the GRE tunnel based on the sending condition of the first detection message, which specifically includes: in response to the first detection message being in sending failure, determining the number of times of consecutive sending failures of the first detection message, and in response to the number of times reaching a first threshold, determining that the GRE tunnel is in the disconnected state; in response to the first detection message being in sending success, determining the number of times of consecutive sending successes of the first detection message, and in response to the number of times reaching a second threshold, determining that the GRE tunnel is in the connected state.

According to one or more embodiments of the present disclosure, the target communication data includes a first resource access request and a first data packet fed back by the network device based on the first resource access request. The communication unit transmits the target communication data through the GRE tunnel between the target UPF and the gateway device whose operating state is normal, which specifically includes: in response to the target UPF receiving the first resource access request sent by the internet of things device, transmitting the first resource access request to the gateway device whose operating state is normal through the GRE tunnel between the target UPF and the gateway device whose operating state is normal; sending the first resource access request to a forwarding router through the gateway device whose operating state is normal, and sending the first resource access request to the network device through the forwarding router; adding, to the routing table of the forwarding router, a drainage routing corresponding to the gateway device whose operating state is failure, the drainage routing including a device identification of the gateway device whose operating state is normal and address information of the target UPF; in response to the forwarding router receiving the first data packet fed back by the network device, sending the first data packet to the gateway device whose operating state is normal based on the drainage routing; and transmitting the first data packet to the target UPF through the gateway device whose operating state is normal by using the GRE tunnel between the target UPF and the gateway device whose operating state is normal, and forwarding the first data packet to the internet of things device through the target UPF.

According to one or more embodiments of the present disclosure, the communication unit is further configured to, in response to the operating state of the gateway device whose operating state is failure returning to normal, delete the drainage routing, and transmit the target communication data through a GRE tunnel between the UPF and the gateway device whose operating state is failure.

According to one or more embodiments of the present disclosure, the network communication device further includes: a monitoring unit. The monitoring unit is configured to determine an operating state of the UPF; in response to the operating state of the UPF being normal, add, to the routing table of the forwarding router, the drainage routing corresponding to the gateway device whose operating state is failure; and in response to the operating state of the UPF being failure, report a failure to a monitoring server corresponding to the UPF.

According to one or more embodiments of the present disclosure, the monitoring unit determines the operating state of the UPF, specifically including: determining a connection state of a GRE tunnel established between the UPF and each gateway device; in response to the connection state of the GRE tunnel established between the UPF and each gateway device being in a disconnected state, determining that the operating state of the UPF is failure; and in response to a connection state of one or more GRE tunnels being in a connected state, determining that the operating state of the UPF is normal.

In a third aspect, according to one or more embodiments of the present disclosure, an electronic device is provided, and the electronic device includes: at least one processor and a memory; where the memory stores computer-executable instructions; and the at least one processor executes the computer-executable instructions stored in the memory to cause the at least one processor to execute the network communication method of the internet of things device according to the above first aspect and various possible designs of the first aspect.

In a fourth aspect, according to one or more embodiments of the present disclosure, a computer-readable storage medium is provided. The computer-readable storage medium stores computer-executable instructions which, when executed by a processor, implement the network communication method of the internet of things device according to the above first aspect and various possible designs of the first aspect.

In a fifth aspect, according to one or more embodiments of the present disclosure, a computer program product is provided, and the computer program product includes a computer program, where the computer program, when executed by a processor, implement the network communication method of the internet of things device according to the above first aspect and various possible designs of the first aspect.

The above description is only preferred embodiments of the present disclosure and an illustration of the applied technical principles. Those skilled in the art should understand that the disclosure scope involved in the present disclosure is not limited to the technical solutions formed by the specific combination of the above technical features, and should also cover other technical solutions formed by any combination of the above technical features or equivalent features thereof without departing from the above disclosure concept, for example, a technical solution formed by replacing the above features with technical features with similar functions disclosed in (but not limited to) the present disclosure.

In addition, although various operations are described in a specific order, this should not be understood as requiring these operations to be performed in the specific order shown or in a sequential order. Under certain circumstances, multitasking and parallel processing may be advantageous. Similarly, although the above discussion contains several specific implementation details, these should not be interpreted as limitations on the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of methods, it should be understood that the subject matter defined in the appended claims is not necessarily limited to the specific features or actions described above. On the contrary, the specific features and actions described above are only exemplary forms for implementing the claims.

## Claims

1. A network communication method of an internet of things device, comprising:
determining (S201) a target user plane function, UPF, to which the internet of things device belongs in response to receiving a plurality of pieces of communication data between the internet of things device and a network device, the target UPF being configured to provide a routing and forwarding function of a user plane data packet, wherein each UPF is connected to at least two gateways and realizes load balancing by crossed generic routing encapsulation, GRE, tunnels;
determining (S202) a GRE tunnel corresponding to each of at least two gateway devices corresponding to the target UPF, wherein the GRE tunnel is configured to transmit communication data between a UPF and a gateway device; and
transmitting (S203) the plurality of pieces of communication data through the GRE tunnel corresponding to each of the at least two gateway devices corresponding to the target UPF,
wherein the plurality of pieces of communication data comprise first communication data sent by the internet of things device to the network device and second communication data sent by the network device to the internet of things device.

2. The method of claim 1, wherein transmitting (S203) the plurality of pieces of communication data through the GRE tunnel corresponding to each of the at least two gateway devices corresponding to the target UPF comprises:
monitoring (S301) an operating state of the at least two gateway devices corresponding to the target UPF, the operating state comprising normal and failure;
transmitting (S302), in response to the operating state of the at least two gateway devices corresponding to the target UPF being normal, communication data corresponding to each GRE tunnel through the GRE tunnel between the UPF and the at least two gateway devices; and
in response to an operating state of any gateway device corresponding to the target UPF being failure, draining (S303) target communication data corresponding to the gateway device whose operating state is failure to another gateway device whose operating state is normal, and transmitting the target communication data through a GRE tunnel between the target UPF and the gateway device whose operating state is normal.

3. The method of claim 2, wherein monitoring (S301) the operating state of the at least two gateway devices corresponding to the target UPF comprises:
determining, for each gateway device, a connection state of a GRE tunnel established between the gateway device and each UPF;
in response to the connection state of the GRE tunnel established between the gateway device and each UPF being in a disconnected state, determining that the operating state of the gateway device is failure; and
in response to a connection state of one or more GRE tunnels being in a connected state, determining that the operating state of the gateway device is normal.

4. The method of claim 3, wherein determining the connection state of the GRE tunnel established between the gateway device and each UPF comprises:
periodically sending (S601) a first detection message to each UPF through the gateway device;
determining (S602), for the GRE tunnel corresponding to each UPF, a sending condition of the first detection message based on whether the gateway device receives a first response message from the UPF; and
determining (S603) the connection state of the GRE tunnel based on the sending condition of the first detection message.

5. The method of claim 4, wherein the sending condition of the first detection message comprises sending success and sending failure; and
correspondingly, determining (S603) the connection state of the GRE tunnel based on the sending condition of the first detection message comprises:
in response to the first detection message being in sending failure, determining a number of times of consecutive sending failures of the first detection message, and in response to the number of times reaching a first threshold, determining that the GRE tunnel is in the disconnected state; and
in response to the first detection message being in sending success, determining a number of times of consecutive sending successes of the first detection message, and in response to the number of times reaching a second threshold, determining that the GRE tunnel is in the connected state.

6. The method of claim 2, wherein the target communication data comprises a first resource access request and a first data packet fed back by the network device based on the first resource access request; and
transmitting the target communication data through the GRE tunnel between the target UPF and the gateway device whose operating state is normal comprises:
in response to the target UPF receiving the first resource access request sent by the internet of things device, transmitting the first resource access request to the gateway device whose operating state is normal through the GRE tunnel between the target UPF and the gateway device whose operating state is normal;
sending the first resource access request to a forwarding router through the gateway device whose operating state is normal, and sending the first resource access request to the network device through the forwarding router;
adding, to a routing table of the forwarding router, a drainage routing corresponding to the gateway device whose operating state is failure, the drainage routing comprising a device identification of the gateway device whose operating state is normal and address information of the target UPF;
in response to the forwarding router receiving the first data packet fed back by the network device, sending the first data packet to the gateway device whose operating state is normal based on the drainage routing; and
transmitting the first data packet to the target UPF through the gateway device whose operating state is normal by using the GRE tunnel between the target UPF and the gateway device whose operating state is normal, and forwarding the first data packet to the internet of things device through the target UPF.

7. The method of claim 6, further comprising:
in response to the operating state of the gateway device whose operating state is failure returning to normal, deleting the drainage routing, and transmitting the target communication data through a GRE tunnel between the UPF and the gateway device whose operating state is failure.

8. The method of claim 6, wherein, before adding, to the routing table of the forwarding router, the drainage routing corresponding to the gateway device whose operating state is failure, the method further comprises:
determining an operating state of the UPF; and
in response to the operating state of the UPF being normal, adding, to the routing table of the forwarding router, the drainage routing corresponding to the gateway device whose operating state is failure; and in response to the operating state of the UPF being failure, reporting a failure to a monitoring server corresponding to the UPF.

9. The method of claim 8, wherein determining the operating state of the UPF comprises:
determining a connection state of a GRE tunnel established between the UPF and each gateway device;
in response to the connection state of the GRE tunnel established between the UPF and each gateway device being in a disconnected state, determining that the operating state of the UPF is failure; and
in response to a connection state of one or more GRE tunnels being in a connected state, determining that the operating state of the UPF is normal.

10. A network communication device of an internet of things device, comprising:
a first determining unit (801) configured to determine a target user plane function, UPF, to which the internet of things device belongs in response to receiving a plurality of pieces of communication data between the internet of things device and a network device, the target UPF being configured to provide a routing and forwarding function of a user plane data packet, wherein each UPF is connected to at least two gateways and realizes load balancing by crossed generic routing encapsulation, GRE, tunnels;
a second determining unit (802) configured to determine a GRE tunnel corresponding to each of at least two gateway devices corresponding to the target UPF, wherein the GRE tunnel is configured to transmit communication data between a UPF and a gateway device; and
a communication unit (803) configured to transmit the plurality of pieces of communication data through the GRE tunnel corresponding to each of the at least two gateway devices corresponding to the target UPF, wherein the plurality of pieces of communication data comprise first communication data sent by the internet of things device to the network device and second communication data sent by the network device to the internet of things device.

11. An electronic device, comprising: a processor and a memory;
wherein the memory stores computer-executable instructions, and
the processor is configured to execute the computer-executable instructions stored in the memory to cause the processor to execute the network communication method of the internet of things device according to any one of claims 1 to 9.

12. A computer-readable storage medium, wherein the computer-readable storage medium stores computer-executable instructions which, when executed by a processor, implement the network communication method of the internet of things device of any of claims 1 to 9.

13. A computer program product, comprising a computer program, wherein the computer program, when executed by a processor, implement the network communication method of the internet of things device of any of claims 1 to 9.
